# EUROPEAN PATENT APPLICATION

(11) **EP 4 177 579 A1**
(43) Date of publication of application: **10.05.2023**
(21) Application number: 20921271.1
(22) Date of filing: 11.12.2020
(51) Int. Cl.: G01F 23/292, G01S 17/08, G01S 17/88, G01S 19/14

(54) **IOT-BASED GROUNDWATER MONITORING SYSTEM USING LIDAR SENSOR TECHNOLOGY**

(30) Priority: 24.02.2020 KR 20200022069
(71) Applicant: Yoon, Pil Sun, Daejeon 34121 (KR)
(72) Inventor: Yoon, Pil Sun, Daejeon 34121 (KR)
(74) Representative: Viering, Jentschura & Partner mbB Patent- und Rechtsanwälte
(86) International application number: PCT/KR2020/018116
(87) International publication number: WO 2021/172719

(57) **Abstract**

The present invention relates to a groundwater monitoring system using an IoT-based LiDAR sensing technology, including: one or more LiDAR sensing devices each installed on the upper periphery of a groundwater well to measure a groundwater level and thus transmit data values including the measured groundwater level to the outside; and a management device for receiving the data values from the LiDAR sensing devices and thus storing and managing the received data values. Each LiDAR sensing device may include: a GPS sensor for recording position information, based on satellite signals; a measuring sensor for emitting a laser beam vertically and downwardly to measure the groundwater level and thus produce groundwater level information; a memory for integrating the position information and the groundwater level information with each other as one data value and storing the data value; a communication part for transmitting the stored data value to the outside; and a power supply part for supplying the power for the operation thereof.

## Description

### Technical Field

The present invention relates to a groundwater monitoring system using an IoT-based LiDAR sensing technology, and more specifically, to an IoT-based groundwater monitoring system that is capable of allowing a LiDAR sensing device on which a LiDAR sensor and a GPS sensor are mounted to be installed on the upper periphery of a groundwater well to thus store and manage the position information of the LiDAR sensing device and real time groundwater level change data.

### Background Art

A groundwater level is a value obtained by adding an elevation head and a pressure head of groundwater on an aquifer, and the groundwater level, which is represented as an altitude of a groundwater table or a distance from the surface of the ground to the surface of groundwater, becomes changed continuously in physical properties thereof according to variations in seasonal groundwater recharge ratio, atmospheric pressure, and tide. The states are called groundwater level fluctuations.

Groundwater is the water present beneath the surface of the Earth, and rainwater falling to the ground flows along the surface of the ground or soaks into the soil so that it moves to rivers and some of the rainwater permeate into the ground. Accordingly, water that accumulates saturatedly underground is called groundwater.

Groundwater is very important as a water resource found underground. Further, groundwater, which is the water present in the cracks and spaces in soil (porous media) and fractured rock, is a structural material for supporting structures such as the soil and the fractured rock.

If water leaks from the cracks and spaces in soil and fractured rock, accordingly, subsidence of the ground may occur, and in the case of weak ground, a sinkhole caused by sudden collapse of the surface layer of the ground may be generated.

About 900 or more sinkholes are generated in Korea every year, and in this case, the number of times of the occurrence of the sinkholes in cities increases to cause serious human and property damages.

The sinkholes may result from the underground cavity formed by the leakage of tap water due to the breakage of a water pipe, excessive use of groundwater, large-scale underground construction work, and the like.

Further, sudden changes in groundwater level are revealed as one of the early signs of an earthquake, and high public interest in the exhaustion of groundwater caused by climate changes and the indiscriminate use of groundwater becomes increased. Further, conflicts between companies producing bottled water and residents in the corresponding areas are often caused. Accordingly, there is a definite need to continuously monitor changes in groundwater level over a long period of time.

Conventional technologies relating to groundwater level monitoring are disclosed in Korean Patent No. 10-1177318 entitled "Automatic monitoring method for groundwater observation network" and in Korean Patent No. 10-1989975 entitled "Groundwater level monitoring-based ground subsidence danger warning method and device".

The automatic monitoring method for groundwater observation network, as disclosed in Korean Patent No. 10-1177318, includes the steps of measuring various conditions of groundwater, such as water temperature, groundwater level, electrical conductivity, and the like, transmitting the measured data to a central control system, and performing the encryption of the transmitted data to prevent the data from being exposed to a third party, and the groundwater level monitoring-based ground subsidence danger warning method and device, as disclosed in Korean Patent No. 10-1989975, is capable of monitoring the changes in groundwater level that become the main cause of the subsidence of the ground around an excavated area and evaluating occurrence risks of the subsidence of the ground based on the monitoring results to thus prevent safety accidents from happening.

In the groundwater level measuring methods used in the conventional technologies, a distance from the surface of the ground to the surface of groundwater is first measured by means of a tape measure from which sounds are generated when electricity is transmitted thereto, and next, a sensor connected to a rope moves from the top of the groundwater well below the surface of the groundwater to measure a pressure in the groundwater, while another sensor, which is installed in the air, is measuring an atmospheric pressure, so that the pre-measured length up to the surface of the groundwater is converted using a difference between the measured two pressures.

In the case of the conventional groundwater level measuring methods, however, it is hard that the high-priced devices are installed correspondingly on the plurality of groundwater wells because of high installation costs, the processes of installing the devices and calculating the measured values are complicated, and a separate device for collecting the installed sensors to extract the values stored in the sensors has to be required.

As a result, a lot of time for measuring the groundwater levels in the plurality of groundwater wells has to be required, and it is hard to immediately handle sudden changes in groundwater level. Therefore, there is a definite need to develop a system capable of solving such conventional problems so that the system can quickly measure the groundwater levels of all of the groundwater wells and immediately handle even the sudden changes in groundwater level.

### Disclosure

### Technical Problem

Accordingly, a groundwater monitoring system using an IOT-based LiDAR sensing technology according to the present invention has been made in view of the above-mentioned problems occurring in the related art.

In the conventional practices, however, it is hard that the high-priced devices are installed correspondingly on the plurality of groundwater wells because the installation causes a high cost, the processes of installing the devices and calculating the measured values are complicated, and a separate device for collecting the installed sensors to extract the values stored in the sensors has to be required.

For this reason, a lot of time, labors, and costs are needed to measure the groundwater levels of the groundwater wells installed in each district, and it is difficult to immediately handle the sudden changes in groundwater levels. Accordingly, it is an object of the present invention to provide a groundwater monitoring system using an IOT-based LiDAR sensing technology that is capable of solving the above-mentioned problems the conventional technologies have had.

### Technical Solution

The present invention is proposed to accomplish the above-mentioned objects.

According to the present invention, there is provided a groundwater monitoring system using an IoT-based LiDAR sensing technology, including: one or more LiDAR sensing devices each installed on the upper periphery of a groundwater well to measure a groundwater level and thus transmit data values including the measured groundwater level to the outside; and a management device for receiving the data values from the LiDAR sensing devices and thus storing and managing the received data values.

Each LiDAR sensing device may include: a GPS sensor for recording position information, based on satellite signals; a measuring sensor for emitting a laser beam vertically and downwardly to measure the groundwater level and thus produce groundwater level information; a memory for integrating the position information and the groundwater level information with each other as one data value and storing the data value; a communication part for transmitting the stored data value to the outside; and a power supply part for supplying the power for the operation thereof.

### Advantageous Effects

According to the present invention, the groundwater monitoring system using an IoT-based LiDAR sensing technology has the following characteristics.

First, the groundwater monitoring system is configured to have the LiDAR sensing devices each installed on the upper periphery of the groundwater well to measure the groundwater level and the management device for storing and recording the measured groundwater level data received from the LiDAR sensing devices.

As a result, the groundwater monitoring system is capable of quickly measuring the groundwater levels of all of the groundwater wells as the management objects and immediately handling even sudden changes in the groundwater levels to thus prepare for various expected situations.

### Brief Description of Drawings

FIG. 1 is a block diagram showing a groundwater monitoring system using an IoT-based LiDAR sensing technology according to the present invention.
FIGs. 2a and 2b are perspective views showing a process of installing a LiDAR sensing device on a groundwater well according to the present invention.
FIG. 3 is a block diagram showing operating relations among a GPS sensor, a measuring sensor, a memory, a communication part, and a power supply part constituting the LiDAR sensing device according to the present invention.
FIGs. 4a and 4b are perspective views showing examples wherein a protection casing is used for the LiDAR sensing device according to the present invention.
FIG. 4c is a perspective view showing an example wherein a locking part is located on top of the protection casing according to the present invention.
* Detailed explanations of main reference numerals in the drawings *

100: LiDAR sensing device
110: GPS sensor
120: Measuring sensor
130: Memory
140: Communication part
150: Power supply part
200: Management device
300: Protection casing
310: Slant surface
320: Cap
330: Locker
A: Groundwater well

### Best Mode for Invention

The present invention relates to a groundwater monitoring system using an IoT-based LiDAR sensing technology.

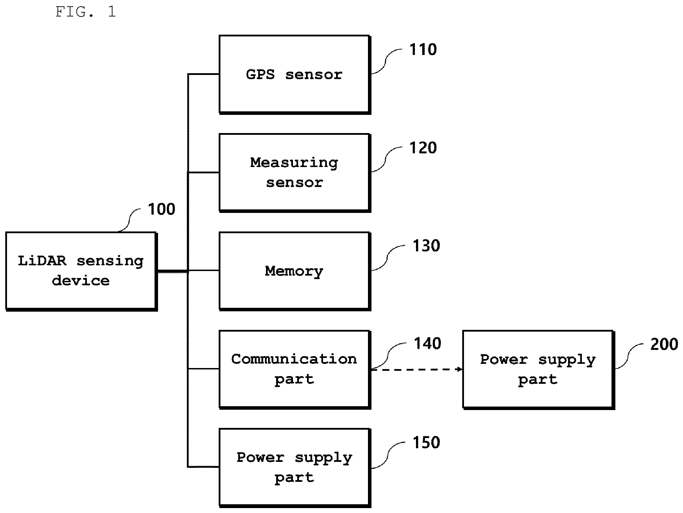

As shown in FIG. 1, a groundwater monitoring system using an IoT-based LiDAR sensing technology includes one or more LiDAR sensing devices 100 each installed on the upper periphery of a groundwater well to measure a groundwater level and thus transmit data values including the measured groundwater level to the outside; and a management device 200 for receiving the data values from the LiDAR sensing devices 100 and storing and managing the received data values.

Each LiDAR sensing device 100 includes: a GPS sensor 110 for recording position information, based on satellite signals; a measuring sensor 120 for emitting a laser beam vertically and downwardly to measure the groundwater level and thus produce groundwater level information; a memory 130 for integrating the position information and the groundwater level information with each other as one data value and storing the data value; a communication part 140 for transmitting the stored data value to the outside; and a power supply part 150 for supplying the power for the operation thereof.

Hereinafter, the present invention is disclosed in detail with reference to the attached drawings.

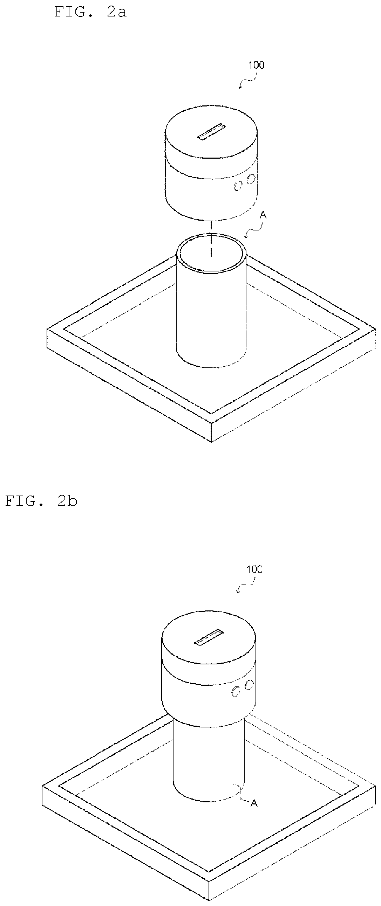

As shown in FIGs. 2a and 2b, first, the LiDAR sensing device 100 is installed on the upper periphery of the ground side of a groundwater well having the shape of a vertical pipe located vertically below the ground from the surface of the ground, and so as to ensure easiness in installation and working efficiency, the LiDAR sensing device 100 is configured to have the shape of a cap for closing the upper end periphery of the groundwater well exposed to the surface of the ground.

Unlike the conventional groundwater level measuring device in which after a cap is first separated from a groundwater well, a distance from the surface of the ground to the surface of groundwater is measured by means of a tape measure from which sounds are generated when electricity is transmitted thereto, and next, a sensor connected to a rope moves from the top of the groundwater well below the surface of the groundwater to measure a pressure in the groundwater, while another sensor, which is installed in the air, is measuring an atmospheric pressure, so that the pre-measured length up to the surface of the groundwater is converted using a difference between the measured two pressures, accordingly, the LiDAR sensing device 100 according to the present invention is simple in installation for groundwater level measurement, always maintained at the installed state thereof, and basically prevented from coming into contact with the groundwater to avoid the occurrence of corrosion or malfunction.

In specific, the LiDAR sensing device 100 includes a cylindrical body with an insertion groove formed on the bottom thereof to insert the upper periphery of the circular groundwater well and a display panel disposed on top thereof, which is shown in FIGs. 2a and 2b.

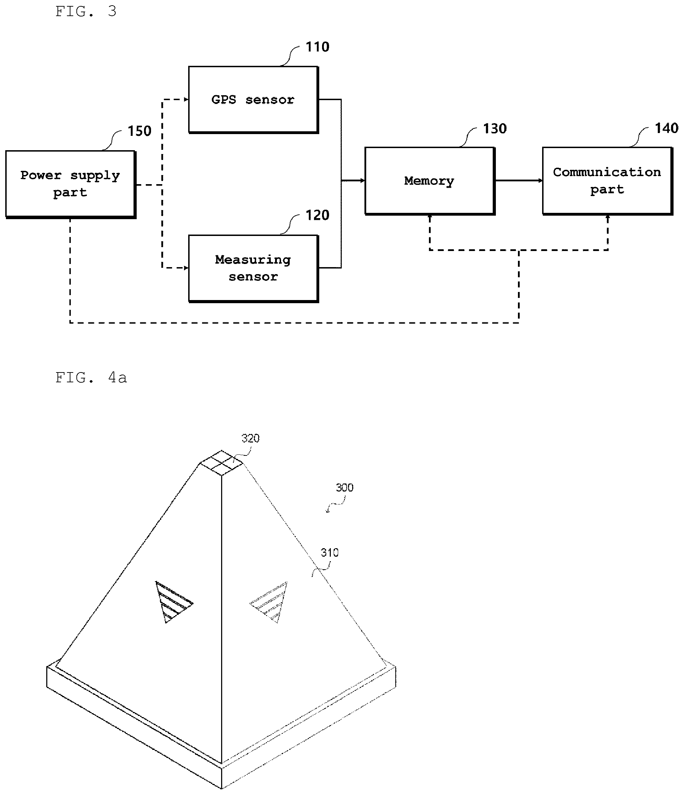

Further, as shown in FIG. 3, inside the body of the LiDAR sensing device 100 are provided the GPS sensor 110 for recording position information, based on the satellite signals, the memory 130 for integrating the position information and the groundwater level information with each other as one data value and storing the data value, the communication part 140 for transmitting the stored data value to the outside, the power supply part 150 for supplying the power for the operation thereof, and a level meter for maintaining the installed state thereof horizontally on level.

Further, the measuring sensor 120 for emitting a laser beam vertically and downwardly to measure the groundwater level and thus produce groundwater level information is disposed inside the insertion groove of the body of the LiDAR sensing device 100, and in various forms outside the body of the LiDAR sensing device 100 are provided a power button for supplying the power for groundwater level measurement or stopping the supply of the power, a screen operating button for supplying the power for operating the display panel or stopping the supply of the power for operating the display panel, and one or more antennas for performing the functions of the communication part 140.

Accordingly, it is desirable that a manager who installs the LiDAR sensing device 100 on the upper periphery of the groundwater well starts power supply and always makes the supplied power to be kept by means of the power button, but so as to achieve energy saving, it is more desirable that the operation of the display panel by means of the screen operating button occurs only when the manager is located on a site and is stopped after the check by him or her has been finished.

Further, the information displayed on the display panel includes the groundwater level information measured by the measuring sensor 120, the battery level of the power supply part 150, and the value measured by the level meter, and if one or more parts of the GPS sensor 110, the measuring sensor 120, the memory 130, and the communication part 40 are malfunctioned so that if either the groundwater level information or the position information is not produced, the data value is not stored, or the transmission of the stored data value fails, error messages corresponding to the respective situations are displayed on the display panel, thereby allowing the manager to easily handle the situations.

Moreover, the groundwater monitoring system according to the present invention includes a square pyramid-shaped protection casing 300 having trapezoidal slant surfaces 310, and in this case, each trapezoidal slant surface 310 has an openable and closable ventilation hole formed thereon and is rotatable around the bottom end fixed to the ground.

In specific, the groundwater well on which the LiDAR sensing device 100 is installed is the vertical pipe that extends from the surface of the ground to a depth along which groundwater flows and has one or more empty spaces formed on the portion coming into contact with the groundwater. Further, the groundwater well is installed solely in a state where the upper end periphery thereof is exposed to the ground, and otherwise, the groundwater well is installed together with a concrete structure.

Accordingly, as shown in FIG. 4a, the protection casing 300 is located on the ground, while having the shape of the square pyramid, so as to protect the LiDAR sensing device 100 and the groundwater well exposed to the ground from being stolen or damaged and to perform the ventilation of internal air and the adjustment of internal temperature through the manually openable and closable ventilation holes.

In this case, the square pyramid-shaped protection casing 300 is configured to allow the slant surfaces 310 to have angles greater than 60° with respect to the surface of the ground so as to effectively fall rain, snow, and the like and reduce an installation area.

Further, the protection casing 300 advantageously requires the installation area smaller than the conventional hexahedron-shaped casing or fence-shaped protection equipment and is prefabricated so that the installation cost and time of the protection casing 300 can be reduced.

The protection casing 300 has caps 320 bent from the respective trapezoidal slant surfaces 310 and thus adjacent to one another to form the entire top thereof, and when the caps 320 are located adjacent to each other, they form slant grooves on the flat top of the square pyramid-shaped protection casing 300 to easily drain rainwater to the sides of the protection casing 300.

In specific, the slant grooves are formed inclinedly from the center of top of the protection casing 300 toward the sides of the protection casing 300, so that the rainwater falling on top of the protection casing 300 is immediately drained to the sides of the protection casing 300, thereby protecting the LiDAR sensing device 100 located under the slant grooves from water.

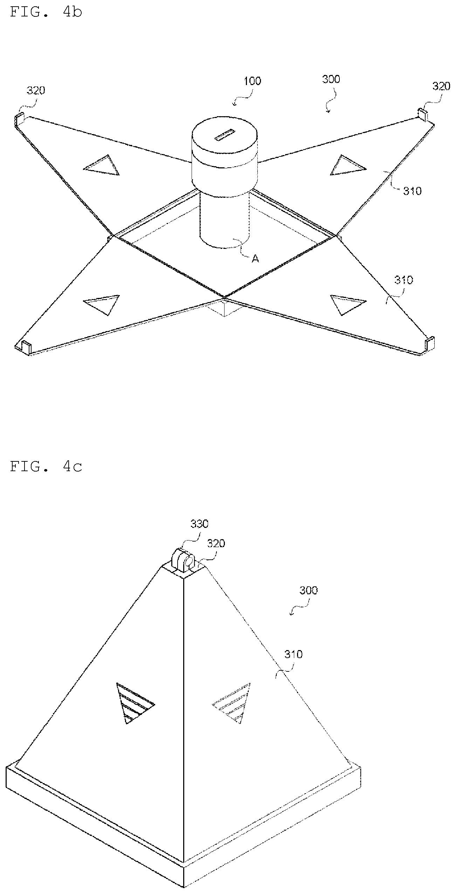

Further, as mentioned above, the slant surfaces 310 constituting the protection casing 300 are rotatable around the bottom ends fixedly disposed to the ground, and accordingly, as shown in FIG. 4b, all of the slant surfaces 310 are laid on the ground so that the LiDAR sensing device 100 and the upper end periphery of the groundwater well become exposed to the outside. After that, all of the slant surfaces 310 rotate again to form the square pyramid-shaped protection casing 300.

If it is desired to directly check the groundwater level or the battery level of the power supply part 150 or replace the power supply part 150 with new one, the respective slant surfaces 310 of the protection casing 300 are laid on the ground by the manager to allow the LiDAR sensing device 100 and the upper end periphery of the groundwater well to be exposed to the outside, and after the check or replacement has been performed, the slant surfaces 310 rotate in the opposite direction to the direction for the exposure to thus allow the protection casing 300 to have the shape of the square pyramid again and are then locked onto one another.

To do this, the caps 320 according to the present invention have locking components located on tops thereof, and the locking components are provided to the form of a locker 330 as shown in FIG. 4c when the protection casing 300 has the shape of the square pyramid, so that the slant surfaces 310 of the protection casing 300 can be locked onto one another by means of a lock.

Further, the management device 200 serves to collect the groundwater levels measured on the groundwater wells to which the groundwater monitoring system according to the present invention is applied and integratedly manage the collected groundwater levels, and accordingly, the management device 200 is configured to receive the data values from the respective LiDAR sensing devices 100, store the received data values, and output the stored data values.

In specific, the management device 200 is configured to produce condition information representing the current groundwater level of each groundwater well as a management object or the changes in groundwater level, based on the position information and the groundwater level information included in one or more data values received, and thus output the produced condition information.

The condition information is data on which the current groundwater level measured on each groundwater well as the management object is specified solely or the current groundwater levels measured on the respective groundwater wells as the management objects are totally listed, and the changes in groundwater level of the respective groundwater wells are listed, and in this case, the condition information is converted into tables, charts, and graphs under the selection of the manager, displayed on the screen of a monitoring device connected wiredly or wirelessly to the management device 200, and transmitted to the manager's portable terminal.

Accordingly, the manager who makes use of the groundwater monitoring system according to the present invention checks only the current groundwater level of the specific groundwater well, comparedly checks the current groundwater levels of the plurality of groundwater wells, designates a given period of time to check changes in groundwater level of the specific groundwater well, and designates a given period of time to check changes in groundwater level of the plurality of groundwater wells.

Further, the management device 200 comparedly analyzes pre-received condition information and currently received condition information to specify the groundwater well where changes in groundwater level exceeding a predetermined range occur and the LiDAR sensing device 100 where a malfunction occurs and outputs the position of the specified groundwater well and the position of the specified LiDAR sensing device 100.

If extreme changes in groundwater level on the groundwater well over a long period of time are detected, it is probable that a sinkhole around the groundwater well will be formed, and before an earthquake is generated, it is probable that sudden changes in groundwater level on the groundwater well within a short period of time will be detected. Accordingly, the management device 200 specifies the groundwater well where changes in groundwater level exceeding a predetermined range occur and outputs the position of the specified groundwater well on the screen of the monitoring device, so that the position of the specified groundwater well can be recognized by the manager.

In this case, a reference for sorting the long period of time and the short period of time and a reference for determining extreme changes in groundwater level and sudden changes in ground groundwater level are set initially by the manager of the management device 200, but the reference for determining extreme changes in groundwater level and sudden changes in groundwater level is automatically changedly set based on the condition information accumulated continuously.

Unless there are special reasons such as earthquakes, large-scale construction works, and the like, the changes in groundwater level on a given district are influenced only by amount of precipitation so that they may be generated always in a constant range. Accordingly, the management device 200 analyzes the changes in groundwater levels of the respective groundwater wells, based on the condition information accumulated continuously, and thus changedly sets the reference for determining extreme changes in groundwater level and sudden changes in groundwater level every groundwater well differently.

For this reason, the management device 200 includes an analysis part for analyzing the changes in groundwater levels of the respective groundwater wells based on the condition information.

Further, if a malfunction occurs on the GPS sensor 110 disposed inside the LiDAR sensing device 100, it is impossible to collect the position information, if a malfunction occurs on the measuring sensor 120 disposed inside the LiDAR sensing device 100, it is impossible to collect the groundwater level information, and if a malfunction occurs on either the memory 130 or the communication part 140 disposed inside the LiDAR sensing device 100, it is impossible to transmit the data value. Accordingly, the management device 200 specifies the reasons of the malfunctions, outputs the specified reasons on the screen of the monitoring device, and allows the occurrence of the malfunctions to be recognized by the manager.

Moreover, the management device 200 checks the integrity of the data values including the position information and the groundwater level information to specify the GPS sensor 110 or the measuring sensor 120 with a malfunction and checks the received conditions of the data values to specify the malfunction of the memory 130 or the communication part 140, so that the management device 200 can specify the LiDAR sensing device 100 with the malfunction and output the position of the specified LiDAR sensing device 100, together with the type of malfunction occurred, on the screen of the monitoring device, thereby inducing the manager to quickly handle the corresponding malfunction.

For this reason, the management device 200 includes a checking part adapted to check the received condition of the data values from the LiDAR sensing device 100 to determine the occurrence and reasons of malfunctions and check the integrity of the data values received from the LiDAR sensing device 100 to determine the occurrence and reasons of malfunctions.

Further, the groundwater monitoring system according to the present invention includes a manager terminal that performs communication with the management device 200 to check the current groundwater levels and the changes in groundwater levels of the respective groundwater wells as the management objects according to the manager's necessity and thus display the specified groundwater well where the changes in groundwater level exceeding the predetermined range occur and the specified LiDAR sensing device 100 with the malfunction on the screen.

The manager terminal is one of terminals such as a smartphone, a table PC, a dedicated terminal, and the like, which can perform communication with the management device 200, and accordingly, the manager terminal is always carried with him or her to thus check data relating to the data values stored in the management device 200 and data outputted automatically from the management device 200, that is, the position of the specified groundwater well where the changes in groundwater level exceeding the predetermined range occur and the position of the specified LiDAR sensing device 100 with the malfunction.

Further, the groundwater monitoring system according to the present invention includes a relay adapted to receive the data values from one or more LiDAR sensing devices 100 and thus transmit the received data values to the management device 200.

In specific, the LiDAR sensing devices 100 are installed correspondingly on the upper peripheries of the groundwater wells disposed in a country or different districts, and accordingly, their installation range is wide so that it is probable that the direct transmission of the data values from the respective LiDAR sensing devices 100 to the management device 200 will fail. To solve such a problem, the groundwater monitoring system according to the present invention has the relay located in every district or every section arbitrarily set.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

So as to obviously explain the scope of the present invention, parts having no relation with the explanation have been omitted in the drawings, and the thicknesses of the lines or the sizes of the components shown in the drawing may be magnified for the clarity and convenience of the description.

In the description, further, it should be noted that the parts corresponding to those of the drawings are indicated by corresponding reference numerals.

## Claims

1. A groundwater monitoring system using an IoT-based LiDAR sensing technology, comprising:
one or more LiDAR sensing devices (100) each installed on the upper periphery of a groundwater well to measure a groundwater level and thus transmit data values including the measured groundwater level to the outside; and
a management device (200) for receiving the data values from the LiDAR sensing devices (100) and storing and managing the received data values,
wherein each LiDAR sensing device (100) comprises:
a GPS sensor (110) for recording position information, based on satellite signals;
a measuring sensor (120) for emitting a laser beam vertically and downwardly to measure the groundwater level and thus produce groundwater level information;
a memory (130) for integrating the position information and the groundwater level information with each other as one data value and storing the data value;
a communication part (140) for transmitting the stored data value to the outside; and
a power supply part (150) for supplying the power for the operation thereof.

2. The groundwater monitoring system according to claim 1, wherein the LiDAR sensing device (100) comprises a cylindrical body with an insertion groove formed on the bottom thereof to insert the upper periphery of the groundwater well and a display panel disposed on top thereof, so that the LiDAR sensing device (100) is disposed to the form of the cap on the upper periphery of the groundwater well.

3. The groundwater monitoring system according to claim 1, further comprising a protection casing (300) having trapezoidal slant surfaces (310) adapted to form the shape of a square pyramid, each slant surface (310) being configured to have an openable and closable ventilation hole formed thereon and be rotatable around the bottom end fixed to the ground to thus protect the upper end periphery of the groundwater well and the LiDAR sensing device (100) that are exposed to the ground from the outside.

4. The groundwater monitoring system according to claim 1, wherein the management device (200) is configured to produce condition information representing current groundwater level of each groundwater well as a management object or the changes in groundwater level, based on the position information and the groundwater level information included in the received data value, and thus output the produced condition information.

5. The groundwater monitoring system according to claim 1, wherein the management device (200) comparedly analyzes pre-received condition information and currently received condition information to specify the groundwater well where changes in groundwater level exceeding a predetermined range occur and the LiDAR sensing device (100) where a malfunction occurs and outputs the position of the specified groundwater well and the position of the specified LiDAR sensing device (100).
